# EUROPEAN PATENT APPLICATION

(11) **EP 4 382 843 A1**
(43) Date of publication of application: **12.06.2024**
(21) Application number: 22211353.2
(22) Date of filing: 05.12.2022
(51) Int. Cl.: F28D 7/16, F28F 9/02, F28F 9/00

(54) **A WATER CHILLER**

(71) Applicant: VALEO SYSTEMES THERMIQUES, 78320 Le Mesnil Saint-Denis (FR)
(72) Inventor: JURKIEWICZ, Damian, 32 050 Skawina (PL); BELZOWSKI, Michal, 32 050 Skawina (PL); SZOSTEK, Dawid, 32 050 Skawina (PL)
(74) Representative: Valeo Systèmes Thermiques

(57) **Abstract**

A water chiller (100) includes a housing (10) and micro-channel tubes (20). The housing (10) includes first panel (10a), second panel (10b) and spaced apart header plates (10c) formed with openings (12c). The micro-channel tubes (20) received in the openings (12c) on the opposite header plates (10c) define fluid communication between end manifolds (30). At least one of the end manifolds (30) includes distribution and collection columns (32a) and (32b) respectively for distribution and collection of a first fluid with respect to the micro-channel tubes (20). At least one of first panel (10a) and second panel (10b) is configured with an inlet and an outlet on same side. The housing (100) is formed of aluminium and at least one of the first panel (1 0a) and the second panel (10b) is formed with water boxes (12a) to configure u-flow of the second fluid inside the housing (10).

## Description

### TECHNICAL FIELD

The present invention relates to a vehicle heat exchanger, more particularly, the present invention relates to a water chiller for a use in a vehicular environment

### BACKGROUND

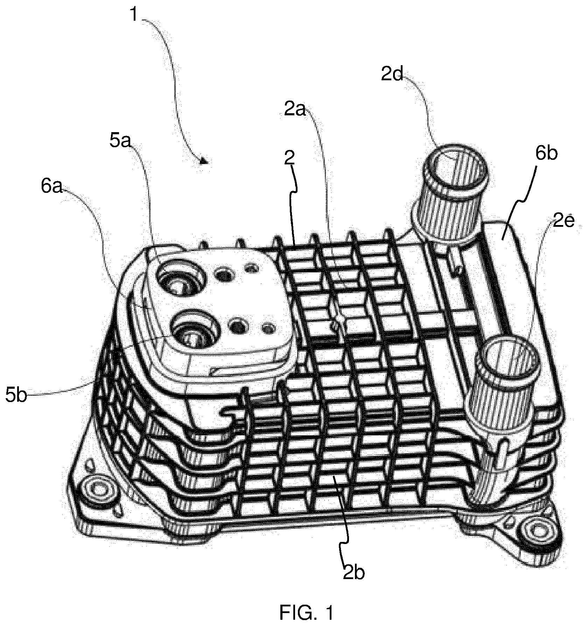

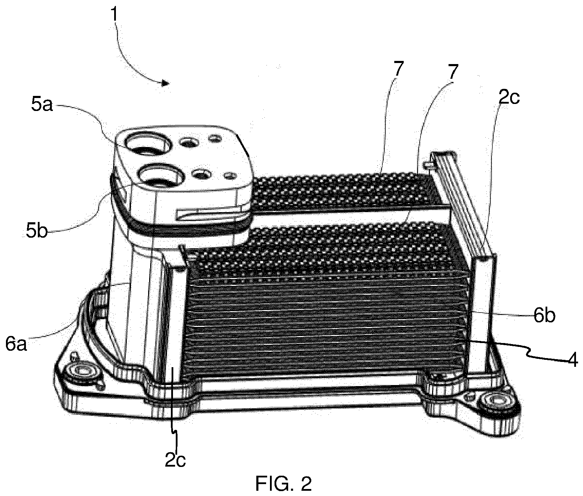

Generally, a conventional water chiller 1, for example, the water chiller 1 disclosed in the EP Patent application EP21175515 includes a housing 2 as illustrated in FIG. 1 and a plurality of micro-channel tubes 4 as illustrated in FIG. 2. The micro-channel tubes 4 received in the housing 2 define fluid flow passages for flow of a first fluid, particularly, refrigerant there-through. The housing 2 defines an enclosure for receiving a second fluid, particularly, water therein and around the micro-channel tubes 4. The micro-channel tubes 4 are separated by turbulators 7 which increase the heat exchange area for the second fluid around the micro-channel tubes 4. The housing 2 is closed at both ends and the micro-channel tubes configure fluid communication between oppositely disposed headers 2c. The housing 2 is formed of plastic material. More specifically, the housing 2 includes a pair of opposite first sides 2a, a pair of opposite second sides 2b and the pair of opposite headers 2c. The housing 2 includes an inlet 2d and an outlet 2e for ingress and egress of the second fluid to be cooled, for example, water with respect to the housing 2. The housing 2 further includes first inlet 5a and first outlet 5b for ingress and egress of the second fluid with respect to the micro-channel tubes 4 through distribution and collection manifolds defined by one of the header 2c. The first fluid entering the first inlet 5a is supplied to the micro-channel tubes 4 for undergoing heat exchange with the second fluid around the micro-channel tubes 4 and egresses through the first outlet 5b after passing through the micro-channel tubes 4. More specifically, the refrigerant distributed to first portions of the micro-channel tubes 4 by a first manifold 6a flow through a first portion of the micro-channel tubes 4 to define a first pass and is collected in the second manifold or intermediate manifold 6b. The first fluid collected in the second / intermediate manifold 6b is directed to another portion of the micro-channel tubes 4 to define the return pass of the second fluid. The second manifold 6b is disposed opposite to the first manifold 6a. Such configuration enables heat exchange between the water flowing around the micro-channel tubes 4 and the refrigerant flowing through the micro-channel tubes 4, thereby causing cooling of the water.

The housing 2 of the conventional water chiller 1 is of plastic material and is formed by moulding process and as such is having simple tubular structure with micro-channel tubes disposed between headers. The housing further includes second inlet 2d and second outlet 2e for ingress and egress of the second fluid inside the housing 2. The second inlet 2d and the second outlet 2e can be configured on same side as illustrated in FIG. 1 or opposite sides. In case the second inlet 2d and the second outlet 2e are configured on opposite sides of the housing and configure linear flow of the second fluid inside the housing 2. Particularly, the second fluid entering inside the housing 2 through the inlet 2d formed proximal to one end of the housing flows along longitudinal direction with respect to and inside the housing 2 and egresses through the outlet 2e formed on other extreme end of the housing 2. In case of such conventional water chiller 1, the surface area of contact between first fluid flowing inside the micro-channel tubes and the second fluid flowing outside the micro-channel tubes is limited, accordingly, the heat transfer efficiency of the water chiller is limited. In order to increase the flow path and contact surface area between the second fluid and the micro-channel for achieving improved heat exchanger, the over-all length of the water chiller is increased, thereby rendering the water chiller bulky and causing packaging issues, particularly in vehicular environment. The second inlet 2d and the second outlet 2e configured on opposite sides of the water chiller 100 also causes packaging issues. In case of the conventional water chillers, the first inlet and the outlet and the second inlet and outlet are formed on the same side, to facilitate moulding operation, the second fluid entering the housing is obstructed by the micro-channels, thereby causing pressure drop in the second fluid and impacting efficiency and performance of the water chiller.

Accordingly, there is a need for a water chiller, wherein the housing of the water chiller is capable of withstanding high internal pressure and addresses reliability issues. Further, there is a need for a water chiller that address leakage issues. Further, there is a need for a water chiller that is efficient and ensure fast cooling for efficient battery cooling, thereby enhancing the performance and service life of the batteries cooled thereby. Furthermore, there is a need for a water chiller that is compact and addresses packaging issues. Furthermore, there is a need for a water chiller that addresses pressure drop issues faced by conventional water chillers.

### OBJECTS

An object of the present invention is to provide a water chiller that obviates shortcomings of the conventional water chiller.

Another object of the present invention is to provide a water chiller that is robust, compact, reliable and addresses packaging and leakage issues.

### SUMMARY

A water chiller is disclosed in accordance with an embodiment of the present invention. The water chiller includes a housing and a plurality of micro-channel tubes. The housing includes at least one first panel, at least one second panel and a pair of spaced apart header plates formed with openings. The plurality of micro-channel tubes received in the openings and disposed between the header plates define fluid communication between end manifolds corresponding to the pair of header plates. At least one of the end manifolds includes distribution and collection columns for distribution and collection of a first fluid with respect to the micro-channel tubes. The distribution and collection columns are in fluid communication with, respectively, a first inlet for ingress and a first outlet for egress of the first fluid. At least one of the first panel and the second panel is configured with a second inlet for ingress and a second outlet for egress of a second fluid with respect to the housing to configure heat exchange between the first fluid and the second fluid. The housing is formed of metal material, such as aluminium, and at least one of the first panel and the second panel is formed with a water boxes to configure u-flow of the second fluid inside the housing.

The micro-channel tubes are disposed between the header plates.

The header plates are disposed between the end manifolds.

In an aspect of the invention, the water boxes are adapted to configure u-flow of the second fluid inside the housing.

Generally, the second inlet and outlet are formed along a first lateral side of the water chiller and the water boxes are formed along second lateral side of the water chiller opposite to the first lateral side.

According to an aspect of the invention, the micro-channel tubes are flat tubes extending along a first plane, said plane being parallel to the at least one first panel or the at least one second panel.

Preferably, the second inlet and outlet are adapted to configure second fluid flow entry inside the housing along the plane of the micro-channel tubes. That is to say, the plane of extension of the first or second panel forming the second outlet is perpendicular to the plane of extension of the micro-channel tubes, and the plane of extension of the first or second panel forming the second inlet is perpendicular to the plane of extension of the micro-channel tubes.

Preferably, the second inlet and outlet are disposed opposite to the distribution and collection columns to configure counter flow between first fluid flowing through the micro-channel tubes and the second fluid flowing outside the micro-channel tubes.

According to an aspect of the invention, the second inlet and outlet are adapted to configure counter flow between the first fluid flowing through the micro-channel tubes and the second fluid flowing outside the micro-channel tubes.

Particularly, the second inlet and outlet are formed along on a first lateral side of one of the opposite first panels and water boxes are formed on a second lateral side opposite to the first lateral side of at least one of the opposite first panels.

Generally, the second inlet and outlet and at least one of the water boxes is formed on opposite lateral sides of the same first panel.

Preferably, the water boxes are formed on opposite first panels and are aligned with respect to each other.

Alternatively, the water boxes are formed on opposite first panels and are offset from each other.

Particularly, the water boxes disposed opposite to the second inlet and outlet configure a first pass and a second pass of the u-flow of the second fluid within the housing.

The first pass is configured between the second inlet and water boxes while the second pass is configured between the water boxes and the second outlet.

Generally, the collection and distribution columns are formed on the same end manifold of the pair of opposite end manifolds.

In an aspect of the invention, each of the micro-channel tubes includes a first portion and a second portion in fluid communication with the respective collection and distribution columns and connected at ends to define u-flow of the first fluid through the micro-channel tubes.

In another aspect of the invention, the micro-channel tubes includes a first set of micro-channel tubes and a second set of micro-channel tubes in fluid communication with the respective collection and distribution columns and connected at ends to define u-flow of the first fluid through the micro-channel tubes.

At least one of the first pass and the second pass defining u-flow of the second fluid configures counter flow between first fluid flowing through micro-channels and second fluid flowing outside the micro-channels.

Generally, the distribution and collection columns includes respective distribution and collection slots that configure fluid communication between the distribution and collection columns and the micro-channel tubes.

Further, at least one of the manifold includes at least one guide plate with horizontal slots configured thereon disposed between header plate and the distribution and collection slots to direct first fluid from the distribution column to the micro-channel tubes and direct first fluid from the micro-channel tubes to the collection column.

By horizontal, we mean a direction perpendicular to the axis of the distribution and collection columns.

Furthermore, the second manifold includes multiple guide plates, few with horizontal slots and at least one with vertical slots, the vertical slots being configured to guide the first fluid flow between different portions of the micro-channel tubes and define the return pass.

According to that aspect of the invention, a first set of micro-channel tubes, facing a first distribution and collection slots, is adapted to configure a first pass, while a second set of micro-channel tubes, fluidly connected to the first set of micro-channel tubes, is adapted to configure a second pass. In other words, the first fluid flows from a first distribution column, to a first distribution slot, to a first set of micro-channel tubes, then, through the guide plate with vertical slots, to a second set of micro-channel tubes, to a second collection slot and to a second collection column.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of a conventional water chiller with plastic housing formed by molding;
FIG. 2 illustrates a top view of the conventional water chiller of FIG. 1 without the plastic housing for depicting the internal details thereof;

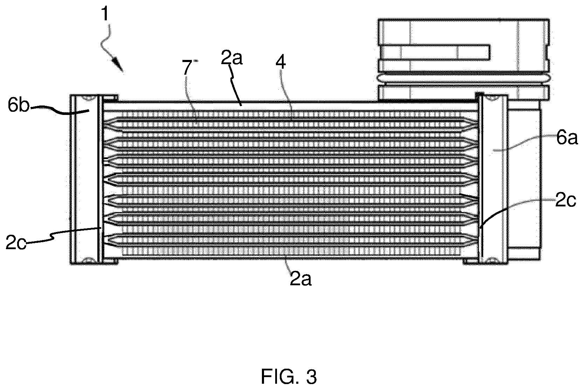

FIG. 3 illustrates a sectional view of the water chiller depicting internal details thereof;
FIG. 4 illustrates an isometric view of water chiller in accordance with an embodiment of the present invention, wherein the housing of the water chiller is formed by assembling and joining aluminum panels and header plates;
FIG. 5 illustrates a top view of the water chiller of FIG. 4;
FIG. 6 illustrates a side view of the water chiller of FIG. 4;
FIG. 7 illustrates a front view of the water chiller of FIG. 4; and
FIG. 8 illustrates an exploded view of the water chiller of FIG. 4 depicting arrangement of the various elements thereof.

The present invention is explained with example of a water chiller. The water chiller includes a housing formed by assembling and joining panels and headers, wherein the panels and the header plates are formed by metal material, such as aluminum material. The housing receives a plurality of micro-channel tubes in spaced apart configuration, between the header plates for flow of a first fluid, particularly, refrigerant, through the micro-channel tubes. The micro-channel tubes are in fluid communication with a first inlet and a first outlet for ingress and egress of the first fluid with respect to the micro-channel tubes. The micro-channel tubes are flat tubes extending along a first plane, said plane being parallel to the second panels.

The at least one first panel, the at least one second panel and the pair of header plates are disposed abutting each other and joined to define an enclosure. The enclosure receives a second fluid, particularly, water from a second inlet formed on the housing. The water received inside the housing egresses from the housing through a second outlet formed on the housing after undergoing heat exchange with a first fluid flowing through micro-channels tubes disposed inside the housing. Since the housing receives and holds water, the housing is required to be leak-proof. The housing of metal material imparts strength and rigidity to withstand internal pressure of the water held therein and to prevent bulging out of the housing. Further, the water chiller is having the second inlet and outlet for the ingress and egress of the second fluid on same side of the water chiller, particularly, on the first panel to configure u-flow of the second fluid inside the housing and render the water chiller compact.

Further, the first inlet and first outlet are arranged to configure entry of the second fluid parallel to the micro-channel tubes. That is to say, the plane of extension of the first panel forming the second inlet and outlet is perpendicular to the plane of extension of the micro-channel tubes. Accordingly, the micro-channel tubes do not obstruct second fluid entering the housing and pressure drop is avoided.

Furthermore, the distribution column in fluid communication with the first inlet for the distribution of the refrigerant to the micro-channel tubes and collection column in fluid communication with the first outlet for the collection of the refrigerant from the micro-channel tubes are arranged on the same side of the water chiller. Such arrangement of the distribution and collection columns on the same side of the water chiller facilitates in configuring u-flow of the refrigerant in the microchannel tubes having first and second portions connected at the ends thereof and renders the water chiller compact. Although, the present invention is explained with example of a water chiller used in vehicle, however, the present invention is also applicable for heat exchangers in any vehicular and non-vehicular environment, where it is required to avoid pressure drop at entrance to the heat exchange fluids. Further, present invention is applicable, wherein it is required to configure u-flow of a first fluid in the micro-channel tubes and u-flow of the second fluid in the housing and outside the micro-channel tubes to configure counter flow between the first fluid and the second fluid to improve efficiency and performance of the heat exchanger and render compact configuration to the heat exchanger.

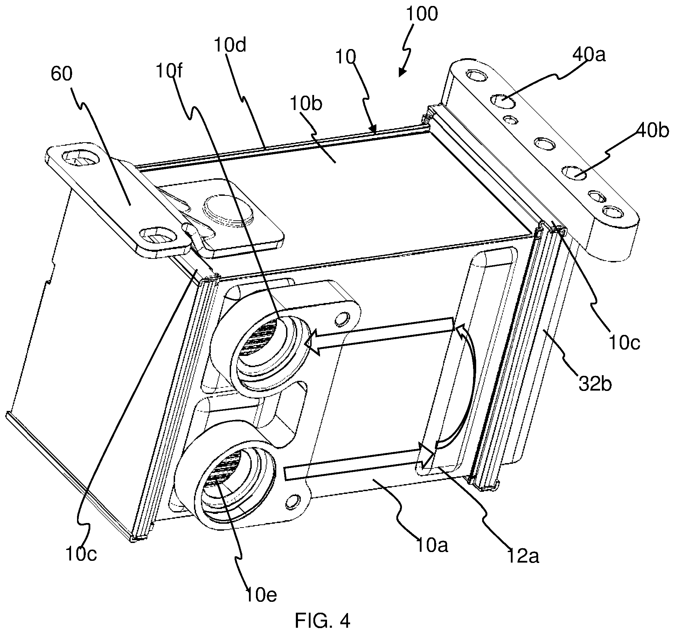

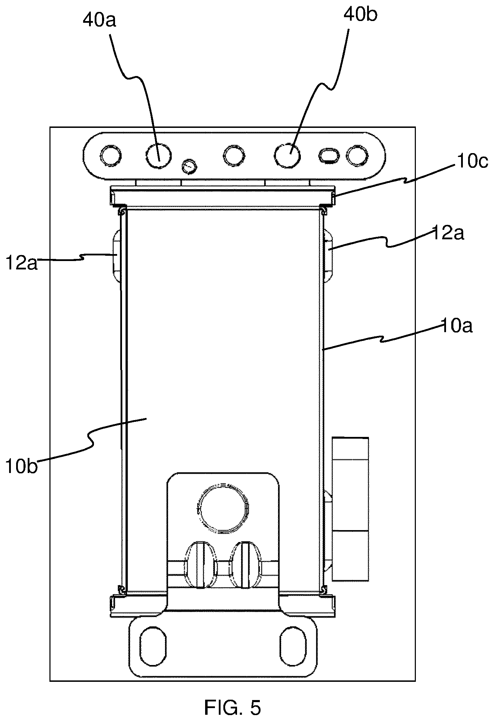

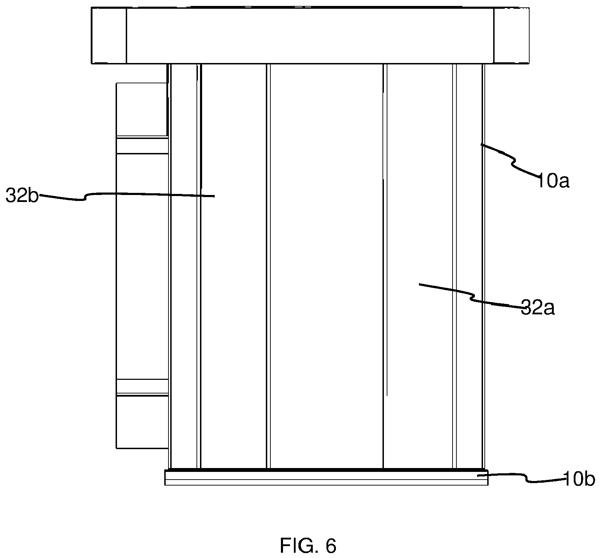

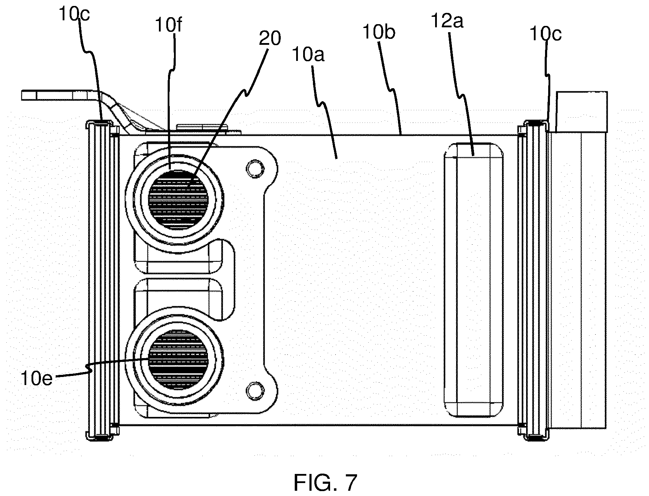

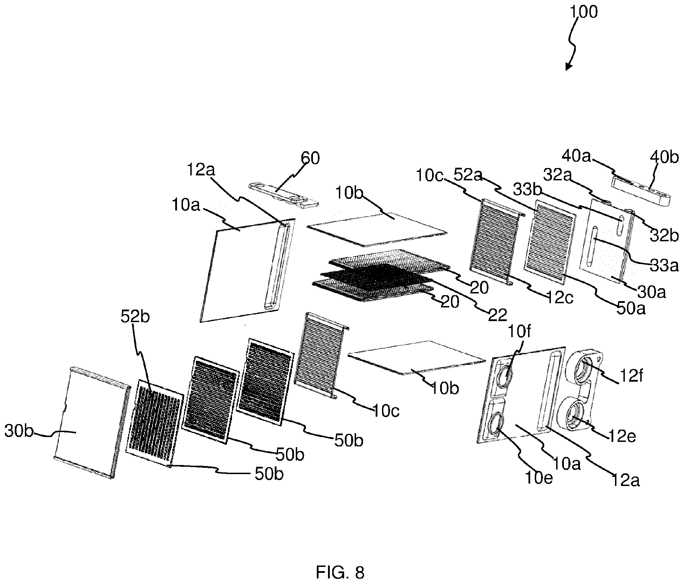

Referring to the FIG. 4 of the accompanying drawings, a water chiller 100 in accordance with an embodiment of the present invention is illustrated. FIG. 5 illustrates a top view of the water chiller 100. FIG. 6 illustrates a side view of the water chiller 100. FIG. 7 illustrates a front view of the water chiller 100. FIG. 8 illustrates exploded view of the water chiller 100.

The water chiller 100 includes a housing 10 depicted in FIG. 4 and the plurality of micro-channel tubes 20 received in the housing 10 and depicted in FIG. 7. The housing 10 includes at least one first panel 10a, at least one second panel 10b and a pair of spaced apart header plates 10c formed with openings 12c. In accordance with a preferred embodiment, a pair of first panels 10a are spaced apart from each other and disposed opposite to one another. Similarly, a pair of second panels 10b are spaced apart from each other and disposed opposite to each other. The spaced apart first panels 10a, the spaced apart second panels 10b in conjunction with the header plates 10c define an enclosure when joined together along the abutting edges thereof. The panels 10a and 10b and the header plates 10c are disposed orthogonal to each other. In accordance with an embodiment of the present invention, the first panel 10a extends beyond the second panel 10b with an overhang portion 10d extending beyond the second panel 10b. Generally, the first panel 10a, the second panel 10b and the header 10c are joined at the interface thereof by a joining process, for example, brazing. The housing 10 being formed by assembling and joining the different panels and the header plates makes the manufacturing of the housing 10 convenient and provides robustness to the housing 10 to withstand the internal pressures exerted by the second fluid held therein. However, the present invention is not limited to any particular joining process for joining the first panel 10a, the second panel 10b and the header plates 10c with respect to each other.

In accordance with an embodiment, the first and second panels 10a and 10b are L-shaped panels, accordingly, the two L-shaped panels 10a and 10b in conjunction with the header plates 10c when joined together configure the enclosed structure of the housing 10.

The plurality of micro-channel tubes 20 are received in the openings 12c and are disposed between the header plates 10c to define fluid communication between end manifolds 30 corresponding to the pair of header plates 10c. The micro-channel tubes 20 received in the housing 10 define fluid flow passages for flow of a first fluid, particularly, refrigerant there-through. The micro-channel tubes 20 are in fluid communication with a first inlet 40a and a first outlet 40b for ingress and egress of the first fluid with respect to the micro-channel tubes 20. The housing 10 defines an enclosure for receiving a second fluid, particularly, water therein and around the micro-channel tubes 20. The micro-channel tubes 20 are separated by turbulators 22 that retard the flow of second fluid around the micro-channel tubes 20. The second fluid is received in the housing 10 and around the micro-channel tubes 20.

In accordance with an embodiment of the present invention, the micro-channel tubes 20 define fluid communication between a first manifold 30a corresponding to a first header plate 10c and an intermediate or second manifold 30b corresponding to a second header plate 10c opposite to the first header plate 10c. With such configuration, the micro-channel tubes 20 with first fluid flowing there-through are arranged in a spaced apart configuration with respect to each other with second fluid around the micro-channel tubes 20 for heat exchange between first fluid, particularly, the refrigerant flowing through the micro-channel tubes 20 and second fluid, particularly, water, around the micro-channel tubes 20.

More specifically, referring to FIG. 8, the distribution column 32a distributes refrigerant to a first set of micro-channel tubes 20 via slot 33a to define a first pass for the refrigerant flow there through. There is at least one guide plate 50a with horizontal slots 52a disposed between the slot 33a and the header 10a to guide the second fluid to the first end of the lower micro-channel tubes 20. The horizontal slots 52a guide the fluid to the micro-channels of the micro-channel tubes 20 all along the width of said micro-channel tubes 20. The refrigerant reaching in the intermediate manifold 30b is directed to a second set of micro-channel tubes 20 to define a return pass of the refrigerant, thereby defining the u-flow path of the refrigerant through the micro-channel tubes 20. There are multiple guide plates 50b with horizontal and vertical slots disposed in the second manifold 30b corresponding to the second header 10c to guide the second fluid from first set of micro-channel tubes 20 to the second set of micro-channel tubes. The refrigerant after flowing through the return pass is collected in the collection column 32b. Such arrangement defines the refrigerant flow path within the micro-channel tubes of the water chiller 100.

The housing 10 further includes the first inlet 40a and the first outlet 40b, wherein the first inlet 40a is for ingress of the refrigerant into the distribution column 32a that distributes the refrigerant to the micro-channel tubes 20 of the water chiller 100 for heat exchange with the second fluid in the housing 10. The first outlet 40b is for the egress of the refrigerant from the collection column 32b that collects refrigerant from the micro-channel tubes 20 of the water chiller 100 after extracting heat from the water second fluid in the housing 10 and around the micro-channels 20.

The housing 10 further includes a second inlet 10e for ingress and a second outlet 10f for egress of the second fluid, for example, water, around the micro-channel tubes 20 received inside the housing 100. The second fluid received in the housing 10 and around the micro-channel tubes 20 rejects thermal energy to the refrigerant flowing through the micro-channel tubes 20 and is cooled in the process. Particularly, the hot second fluid enters through the second inlet 10e, the second fluid flows around the micro-channel tubes 20, cools down and cooled second fluid egresses through the second outlet 10f.

The housing 10 is formed of metal material, such as aluminium, and at least one of the first panel 10a and the second panel 10b is formed with water boxes 12a to configure u-flow of the second fluid inside the housing 10.

The configuration and arrangement of the second inlet and outlet 10e and 10f and the water boxes 12a is so as to configure u-flow of the second fluid inside the housing 10 and counter flow between the first fluid flowing through the micro-channel tubes 20 and second fluid in the housing 10 and around the micro-channel tubes 20. The inlet and outlet are formed on first panel 10a. Further, the water boxes 12 are formed on the opposite first panels 10a and are extending outwardly therefrom. The water boxes 12a and the second inlet 10e and second outlet 10f are formed on the first panels 10a by stamping operation that is convenient compared to when water boxes are to be formed by moulding In case the conventional housing of plastic material. Generally, the second inlet and outlet 10e and 10f are formed along a first lateral side of the water chiller 100 and the water boxes 12a are formed along second lateral side of the water chiller 100 opposite to the first lateral side to configure u-flow of the second fluid inside the housing 10. The water boxes 12a formed opposite to the second inlet and outlet 10e and 10f facilitates flow of the second fluid from the first pass to the second or return pass.

Preferably, the second inlet and outlet 10e and 10f are disposed opposite to the distribution and collection columns 32a and 32b to configure counter flow between first fluid flowing through the micro-channel tubes 20 and the second fluid flowing outside the micro-channel tubes 20.

Particularly, the second inlet and outlet 10e and 10f are formed along a first lateral side of one of the opposite first panels 10a and water boxes 12a are formed on second lateral side opposite to the first lateral side of the opposite first panels 10a. Generally, at least one of the water boxes 12a and the first second inlet and outlet 10e and 10f are formed on opposite lateral sides of the same first panel 10a respectively.

Preferably, the water boxes 12a formed on opposite first panels are aligned with respect to each other. Alternatively, the water boxes 12a formed on opposite first panels 10a are offset from each other. Particularly, the water boxes 12a are disposed opposite to the second inlet and outlet 10e and 10f to configure a first pass and a second pass of the u-flow of the second fluid within the housing 10. At least one of the first pass and the second pass defining u-flow of the second fluid configures counter flow between first fluid flowing through micro-channel tubes 20 and second fluid flowing outside the micro-channel tubes 20.

Also, the configuration and arrangement of the distribution and collection columns 32a and 32b and micro-channel tubes 20 is so as to configure u-flow of the first fluid inside the micro-channel tubes 20 and counter flow between the first fluid flowing through the micro-channel tubes 20 and second fluid in the housing 10 and around the micro-channel tubes 20. Particularly, the collection and distribution columns 32a and 32b are formed on the same end manifold 30 of the pair of opposite end manifolds.

The micro-channel tubes 20 includes a first set of micro-channel tubes 20 and a second set of micro-channel tubes in fluid communication with the respective collection and distribution columns 32a and 32b and connected at ends to define u-flow of the first fluid through the micro-channel tubes 20. Generally, the distribution and collection columns 32a and 32b includes respective distribution and collection slots 33a and 33b that configure fluid communication between the micro-channel tubes 20 and the distribution and collection columns 32a and 32b.

Further, at least one of the manifolds, a first manifold 30a includes at least one guide plate 50a with horizontal slots 52a configured thereon. The guide plate 50a is disposed between header plate 10c and the distribution and collection slots 33a and 33b to direct first fluid from the distribution column 32a to the micro-channel tubes 20 and direct first fluid from the micro-channel tubes 20 to the collection column 32b. Similarly, a second manifold 30b includes multiple guide plates 50b, few with horizontal slots and at least one with vertical slots 52b to guide the second fluid flow between different sets of the micro-channel tubes 20 and define the return pass.

Also at least one mounting bracket 60 is secured to one of the panels for mounting the water chiller 100 to a vehicle frame. As the housing 10 is of metal, such as aluminium, the mounting bracket can be conveniently secured thereto by any joining process such as brazing, riveting, or screwing.

In any case, the invention cannot and should not be limited to the embodiments specifically described in this document, as other embodiments might exist. The invention shall spread to any equivalent means and any technically operating combination of means.

## Claims

1. A water chiller (100) comprising:
• a housing (10) comprising:
∘ at least one first panel (10a);
∘ at least one second panel (10b); and
∘ a pair of spaced apart header plates (10c) formed with openings (12c),
• a plurality of micro-channel tubes (20) received in the openings (12c) and disposed between the header plates (10c) to define fluid communication between end manifolds (30) corresponding to the pair of header plates (10c),
at least one of the end manifolds (30) comprises distribution and collection columns (32a) and (32b) for distribution and collection of a first fluid with respect to the micro-channel tubes (20), the distribution and collection columns (32a) and (32b) being in fluid communication respectively with a first inlet (40a) for ingress and a first outlet (40b) for egress of the first fluid,
at least one of the first panel (10a) and the second panel (10b) is configured with a second inlet (10e) for ingress and a second outlet (10f) for egress of a second fluid with respect to the housing (10) to configure heat exchange between the first fluid and the second fluid,
**characterized in that** housing (10) is formed of metal material, such as aluminium, and at least one of the first panel (10a) and the second panel (10b) is formed with water boxes (12a).

2. The water chiller (100) as claimed in the previous claim, wherein the second inlet and outlet (10e) and (10f) are formed along a first lateral side of the water chiller (100) and the water boxes (12a) are formed along second lateral side of the water chiller (100) opposite to the first lateral side.

3. The water chiller (100) as claimed in any of the preceding claims, wherein the second inlet and outlet (10e) and (10f) are disposed opposite to the distribution and collection columns (32a) and (32b).

4. The water chiller (100) as claimed in any of the preceding claims, wherein the second inlet and outlet (10e) and (10f) and at least one of the water boxes (12a) are formed on opposite lateral sides of the same first panel (10a).

5. The water chiller (100) as claimed in any of the preceding claims, wherein the water boxes (12a) disposed opposite to the second inlet and outlet (10e) and (10f) configure a first pass and a second pass of the u-flow of the second fluid within the housing (10).

6. The water chiller (100) as claimed in any of the preceding claims, the collection and distribution columns (32a) and (32b) are formed on the same end manifold of the pair of opposite end manifolds (30).

7. The water chiller (100) as claimed in any of the preceding claims, at least one of the first pass and the second pass defining u-flow of the second fluid configures counter flow between first fluid flowing through micro-channels (20) and second fluid flowing outside the micro-channels (20).

8. The water chiller (100) as claimed in any of the preceding claims, wherein the distribution and collection columns (32a) and (32b) comprises respective distribution and collection slots (33a) and (33b) that configure fluid communication between the distribution and collection columns (32a) and (32b) and the micro-channel tubes (20).

9. The water chiller (100) as claimed in the previous claim, wherein a first manifold (30a) comprises at least one guiding plate (50a) with horizontal slots (52a) configured thereon, disposed between header plate (10c) and the distribution and collection slots (33a) and (33b) to direct first fluid from the distribution column (33) to the micro-channel tubes (20) and direct first fluid from the micro-channel tubes (20) to the collection column (32b).

10. The water chiller (100) as claimed in claim 8 or 9, wherein a second manifold (30b) includes multiple guide plates (50b), at least one guide plate (50b) with horizontal slots (52a) and at least one other guide plate (50b) with vertical slots (52b), the vertical slots (52b) being configured to guide the first fluid flow between different sets of the micro-channel tubes (20) and define the return pass through the micro-channel tubes (20).
